# EUROPÄISCHE PATENTSCHRIFT

(11) **EP 2 369 078 B1**
(45) Veröffentlichungstag und Bekanntmachung des Hinweises auf die Patenterteilung: **29.06.2016**
(21) Anmeldenummer: 11000896.8
(22) Anmeldetag: 04.02.2011
(51) Int. Cl.: E04B 1/80, E04B 1/86

(54) **Isolationsmaterial**
Insulation material
Matériau d'isolation

(30) Priorität: 12.03.2010 DE 102010011386
(43) Veröffentlichungstag der Anmeldung: 28.09.2011
(73) Patentinhaber: Sandler AG, 95126 Schwarzenbach/Saale (DE)
(72) Erfinder:

(56) Entgegenhaltungen:
- EP-A1- 1 559 844
- EP-A2- 0 277 500
- DE-A1- 10 248 326
- DE-A1- 19 922 592

## Beschreibung

Die Erfindung betrifft ein Isolationsmaterial, welches in der thermischen und/oder akustischen Isolierung von Gebäuden aber auch in Heiz- bzw Kühlsystemen Verwendung findet.

Bei der thermischen und / oder akustischen Isolierung ist, um die Verbaubarkeit zu gewährleisten, eine Steifigkeit der eingesetzten Isoliermaterialien gefordert. Diese wird benötigt um beispielsweise Isoliermatten oder -rollen im Bereich der Dachisolierung zwischen Sparren klemmen zu können.

Aus dem Stand der Technik sind verschiedene Dämmsysteme bekannt

Dämmstoffe aus Weich- oder Hartschäumen, lassen sich zwar einfach konfektionieren, sind aber zu steif um sich Konturen, speziell im Bereich der Dachisolierung oder im Kesselbau anzupassen. Für die Anpassung an Unebenheiten muss Material abgetragen oder ausgeschnitten werden. Dies bedingt einen Mehraufwand an handwerklichen Tätigkeiten beim Einbau bzw in der Vorbereitung.

Handelsüblich wird ein Großteil der Dämmungen aus Mineral- oder auch Glasfasern hergestellte. Diese sind als Platten oder Rollenware erhältlich. Aufgrund der Staubentwicklung beim Verbauen / Konfektionieren und der bekannten Hautirritationsproblematik sind sie nur bedingt einsetzbar.

Aus Vliesstoffen hergestellte Isoliermaterialien, sind beispielsweise aus der DE 19512787 oder auch der WO 2008/012680 bekannt Die Isolationsmaterialien haben eine gute Steifigkeit und lassen sich daher, weil gut klemmbar, gerade im Bereich Dachisolierung / Zwischensparrendämmung einfach verbauen.

Nachteilig bei den vorbeschriebenen Isoliermaterialien ist die durch den homogenen Aufbau bedingte gleichmäßige Steifigkeit des Materials. Werden derartige Materialien beispielsweise in der Altbausanierung eingesetzt, kommt es häufig vor, dass die zu dammende Fläche Unebenheiten d.h. aus der planen Ebene hervorragende Stellen oder unterschiedliche Dicken aufweist Legt man nun das Isoliermaterial auf, ergeben sich aufgrund der Materialsteife zwischen dem Dämmmaterial und der zu dämmenden Fläche sogenannte Kamine, in welchen Luft und daher auch Kälte zirkuliert. Der gewünschte Dämmeffekt wird unterbrochen. Ähnliches gilt auch für die Isolierung von Kesseln und Rohren in Heiz- oder Kühlanlagen. Will man mit dem Stand der Technik entsprechenden Isoliermaterialien eine gekrümmte Oberfläche isolieren, ergeben sich über den Umfang an mehreren Stellen Knickfalten und dadurch wieder offene Stellen zwischen Wandung und Dämmung. Um dies zu vermeiden wird dann überschüssiges Material abgetragen oder ausgeschnitten, dies bedeutet aber erhöhten manuellen Aufwand bei der Verarbeitung mit der Gefahr, dass durch unsauberes Arbeiten, d.h. zu großem Abtrag oder Ausschnitt, die Kältekamine stärker ausgeprägt sind.

Ausgehend vom Stand der Technik war es die Aufgabe der vorliegenden Erfindung, die beschriebenen Nachteile des Standes der Technik zu vermeiden.

Die Aufgabe wird gemäß den Merkmalen der Ansprüche 1 bis 22 gelöst.

Gemäß dem Stand der Technik sind bekannte Isoliermaterialien in x-, y- und auch in z-Richtung steife Materialien. Jedoch gerade in z-Richtung, d.h. über die Dicke eines Isoliermaterials, ist diese Eigenschaft hinderlich.

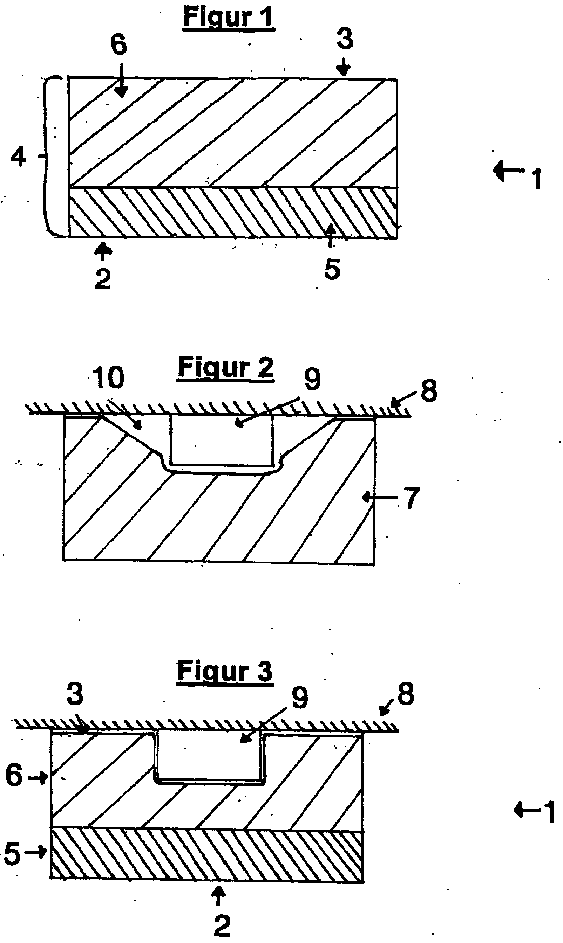

Hier setzt die Erfindung an. Ein erfindungsgemäß ausgeführtes Isoliermaterial wie in Figur 1 dargestellt, weist dabei eine Oberseite (2) und eine Unterseite (3) auf. Ober die Dicke (4) gesehen hat das Isoliermaterial (1) eine der Oberseite (2) zugewandte Zone hoher Dichte (5) und eine der Unterseite (3) zugewandte Zone geringer Dichte (6).

Das Isoliermaterial (1) zeichnet sich durch eine ausgeprägte Zweiseitigkeit in Bezug auf die Eindrückhärte der Oberseite (2) und der Unterseite (3) aus.

Als Eindrückhärte im Sinne der Erfindung wird diejenige Kraft bezeichnet, die das Isoliermaterial einer Druckfinne entgegensetzt, wenn diese Druckfinne um 20% in das Isoliermaterial eindringt.

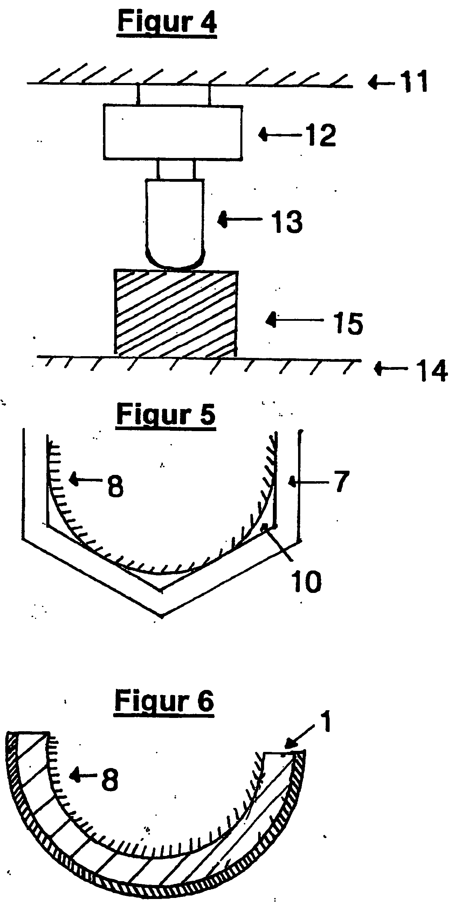

Figur 4 zeigt einen zur Ermittlung der Eindrückhärte geeigneten Prüfaufbau. Dieser besteht aus einer Prüfplatte (14) auf welchem der Prüfling (15) liegt. An einer verfahrbaren Traverse (11) ist eine Kraftmessdose (12) mit einem Messbereich von 0-100N und an dieser wiederum eine Druckfinne (13) angebracht

Die Druckfinne hat eine Breite von 50mm, eine Dicke von 10mm und eine Höhe von 35mm. Die Kante, die beim Test in das Isoliermaterial eindringt, ist in einem Radius von 5mm abgerundet.

Vor Beginn des Tests wird die mit der Kraftmessdose verbundene Anzeige auf null gesetzt. Die Traverse wird dann mit einer Geschwindigkeit von 100mm/min in Richtung des Isoliermaterials gefahren, sodass die Druckfinne in das Isoliermaterial eindringt.

Sobald an der Kraftmessdose eine Kraft von 0,2N anliegt, wird die Ausgangsdicke D0 des Isoliermaterials bestimmt

Die Druckfinne dringt dann weiter in das Isoliermaterial ein, bis ein Weg von 0,4*D0 zurückgelegt wurde. Bei Erreichen eines Eindrückweges von 0,2*D0 wird die zu diesem Zeitpunkt an der Kraftmessdose anliegende Kraft abgelesen. Diese Kraft wird als Eindrückhärte in Newton (N) im Sinne der vorliegenden Erfindung bezeichnet.

Zweckmäßig wird die Eindrückhärte mittels Universalprüfmaschinen der Fa. Zwick, Ulm, Typ 1425 an der Oberseite (2) und an der Unterseite (3) eines Isoliermaterials ermittelt. Der Wert von 20% Stauchung wurde aufgrund üblicher Maße von lattungen oder Kabelkänale, ermittelt, wie sich immer wieder an den Einbauorten finden. Je nach Ausführung des erfindungsgemäßen Isoliermaterials bezüglich der Dicke stellt ein dies ein Eindringen der Druckfinne zwischen 4 und 60mm dar.

Durch den erfindungsgemäßen Unterschied der Eindrückhärte von Oberseite (2) und Unterseite (3) ist es im Vergleich zum Stand der Technik möglich, beim Einbau aus ebenen Flächen herausragende Teile abzudichten und/oder durch die gute Zusammendrückbarkeit ein Abtragen von Material bei unterschiedlich tiefen Einbauorten zu vermeiden.

Die Figuren 2 und 3 sollen dies verdeutlichen. In beiden Figuren wird eine Wandung (8) gezeigt, aus welcher ein Vorsprung (9), beispielsweise ein Kabelkanal, eine Rohrleitung, eine Lattung oder ähnliches hervorragt.

In Figur 2 wird die Wandung (8) mit einem Isolationsmaterial (7) abgedeckt, welches dem Stand der Technik entspricht. Bedingt durch die Steifigkeit des Materials und dadurch hoher Eindrückhärte wird ein Großteil der Oberfläche des Isoliermaterials mit verformt, sodass sich die bereits erwähnten Kältebrücken in Form von Kaminen (10) links und rechts des Vorsprungs (9) bilden können.

Die Figur 3 zeigt die gleiche Einbausituation, wobei die Isolierung mit einem erfindungsgemäß ausgeführten Isoliermaterial (1) durchgeführt wurde.

Die Unterseite (3) des erfindungsgemäßen Isoliermaterials (1) hat eine im Vergleich zur Oberseite (2) deutlich geringere Eindrückhärte, sodass sich die Unterseite (3) des Isoliermaterials (1) eng um den Vorsprung (9) legt und daher einer Kaminbildung vorbeugt.

Die Figur 5 zeigt dies nochmals für einen Anwendungsfall an stark gekrümmten Flächen. Auch hier ergibt sich beim Stand der Technik durch die Steifigkeit eine schlechte Anpassung an die gekrümmte Oberfläche der Wandung (8). Es entstehen Kamine (9).

Bei Verwendung eines erfindungsgemäßen Isoliermaterials (1) wie in Figur 6 lassen sich diese vermeiden.

Ein erfindungsgemäß ausgeführtes Isoliermaterial (1) weist in der Zone geringer Dichte (6) eine Eindrückhärte auf, die maximal das 0,5-fache der Eindrückhärte der Zone hoher Dichte (5) beträgt

Als Ausgangsmaterialien für Herstellung eines erfindungsgemäßen Isoliermaterials werden Schaumstoffe oder auch Vliesstoffe. eingesetzt, mittels denen ein Unterschied in den Eindrückhärten darstellbar ist.

Die nachstehenden Ausführungen beziehen sich auf aus Vliesstoffen aufgebaute, erfindungsgemäß ausgeführte Isoliermaterialien ohne jedoch die Erfindung darauf zu beschränken.

Kennzeichnend für erfindungsgemäße Isoliermaterialien (1) ist der Unterschied der Eindrückhärte der Oberseite (2) zur Unterseite (3).

Bei der Verwendung von Stapelfaservliesen als Grundmaterialien gibt es verschiedene Möglichkeiten, diese Eigenschaft zu erreichen.

Erreicht wird dies durch den Einsatz unterschiedlicher Fasermischungen, beispielsweise der Anteile an Schmelzfasern in den Zonen (5) und (6). In der Zone hoher Dichte (5) sind entsprechend höhere Anteile an Schmelzfasern im Vergleich zur Zone geringer Dichte (6) zu verwenden. Als günstig haben sich 30-80 Gewichtsprozent Schmelzfasern in der Zone hoher Dichte (5) und 10-50 Gewichtsprozent Schmelzfasern in der Zone geringer Dichte (6) erwiesen. Die jeweils auf 100 Gewichtsprozent fehlende Fasermenge wird mit Matrixfasern, d.h. handelsüblichen Stapelfasern auf synthetischer und/oder natürlicher Basis, ergänzt.

Schmelzfasern im Sinne der vorliegenden Erfindung sind Fasern die durch Beaufschlagung mit Hitze schmelzen, im schmelzflüssigen Zustand mit den Matrixfasern eine Verbindung eingehen, sodass das Vlies nach dem Abkühlen verfestigt ist. Geeignet sind dafür handelsübliche, homogen oder auch bikomponent aufgebaute Schmelzfasern, wobei der Schmelzpunkt der schmelzbaren Komponente bevorzugt mindestens 20°C unterhalb dessen der Matrixfaser, sofern diese thermoplastisch sind, zu wählen ist. Bevorzugt eingesetzt werden Polyester / CoPolyester Bikomponentenfasern als Schmelzfasern.

Als Matrixfasern sind alle als Stapelfaser erhältlichen Fasertypen, das heißt Naturfasern wie Hanf oder Flachs, aber auch aus natürlichen oder synthetischen Polymeren wie beispielsweise Polyethylenterephthalat oder Polylactiden hergestellte Synthesefasern, einsetzbar. Bevorzugt kommen handelsübliche Polyethylenterephthalat-Fasem zum Einsatz.

In einer besonders bevorzugten Ausführungsform wird innerhalb des Isoliermaterials (1) die Zone hoher Dichte (5) so ausgestaltet, dass sie maximal 40% der Gesamtdicke (4) einnimmt. Das Flächengewicht der Zone hoher Dichte (5) ist dabei so zu wählen, dass es maximal 50% des Gesamtflächengewichts ausmacht Auch ist der Anteil an Schmelzfasern innerhalb der Zone hoher Dichte (5) bevorzugt bei 50% oder höher zu wählen. Im Gegensatz dazu ist der Schmelzfaseranteil in der Zone geringer Dichte (6) bevorzugt bei 30% oder geringer angesetzt.

Zum Erreichen einer geringen Wärmeleitfähigkeit hat es sich als des Weiteren als zwecksmäßig erwiesen, Fasern eines geringen Titers, also kleiner 6,7dtex, bevorzugt kleiner 4.4dtex, einzusetzen.

Die Herstellung eines erfindungsgemäßen Isoliermaterials aus Vliesstoff kann beispielsweise mittels des Kardierverfahnens geschehen. Die prinzipielle Technik dazu kann dem Buch vliesstoffe", erschienen im Wiley-Verlag, 2000, entnommen werden.

Dazu werden mittels Krempeln und daran anschießenden Vlieslegeeinrichtungen die Zone hoher Dichte (5) und Zone geringer Dichte (6) gebildet.

Die für ein erfindungsgemäßes Isoliermaterial zu wählenden Flächengewichts- und Dickenbereiche richten sich dabei nach den späteren Einsatzgebieten.

So sind beispielsweise im Bereich der Dachisolierung Dicken (4) zwischen 80 und 300mm bei Flächengewichten von 1300 bis 4000 g/qm üblich.

Erfindungsgemäß nimmt die Zone geringer Dichte (6) mindestens 60% der Dicke (4) des erfindungsgemäßen Isoliermaterials (1) ein. Dies bedeutet, dass bei bevorzugten Dicken von 120 bis 160mm Unebenheiten einer Höhe bis zu 50mm ohne Probleme abgedeckt werden, ohne das es zur Kaminbildung oder zur Abzeichnung der Unebenheiten auf der Oberseite (2), die im Allgemeinen die Schauseite ist, kommt

Bei Verwendung des erfindungsgemäßen Isoliermaterials (1) im Bereich der Isolierung von Heiz- oder Kühlsystem sind die abzudeckenden Unebenheiten im Allgemeinen kleiner, sodass hier auch bei Dicken von 20 bis 80mm bereits ausreichende Abdeckung gegeben ist.

Die Dicke wird dabei nach WSP 120.6 (05) bei einer Vorlast von 0,02kPa ermittelt, das Flächengewicht gemäß WSP 130.1(05).

Zur Herstellung eines erfindungsgemäßen Produkts, in Tabelle 1 bezeichnet als VP05019BA31-phil, mit einer Dicke von ca 140mm und einem Flächengewicht von 2900 g/m² sind beispielsweise folgende Verfahrensschritte notwendig:
Zunächst wird eine erste Fasermischung, bestehend aus 30 Gewichtsprozent PET-Matrixfasern im Titer 1,7dtex, 20 Gewichtsprozent PET-Matrixfasern im Titer 3.3dtex und 50 Gewichtsprozent PET/Co-PET Bikomponenten-Schmelzfaser des Kern/Mantel-Typs im Titer 4.4 dtex, hergestellt.

Diese erste Fasermischung wird von einer ersten Krempel zu einem ersten Faserflor verarbeitet, der kontinuierlich einer ersten Legeeinrichtung zugeführt wird.

Die erste Legeeinrichtung, beispielsweise ein Horizontalleger, täfelt nun kontinuierlich einzelne Florlagen auf einem um 90° zum Horizontalleger versetzten, sich kontinuierlich bewegenden Sammelband ab, bis das Flächengewicht des so gebildeten, noch unverfestigten Faserflores 1500 g/qm beträgt. Diese Florlagen sollen im späteren Isoliermaterial die Zone hoher Dichte (5) bilden.

Parallel dazu wird eine zweite Fasermischung, bestehend aus 55 Gewichtsprozent PET-Matrixfasern im Titer 1,7dtex, 15 Gewichtsprozent PET-Matrixfasern im Titer 3.3dtex und 30 Gewichtsprozent PET/Co-PET Bikomponenten-Schmelzfasern des Kern/Mantel-Typs im Titer 4.4 dtex , hergestellt.

Diese zweite Fasermischung wird von einer zweiten Krempel zu einem zweiten Faserflor verarbeitet, der kontinuierlich einer zweiten Legeeinrichtung zugeführt wird.

Die zweite Legeeinrichtung, täfelt nun weitere Florlagen, welche die spätere Zone geringer Dichte (6) bilden, auf das Sammelband mit dem sich darauf befindenden, von der ersten Legeeinrichtung erzeugten und noch unverfestigten Faserflor so lange ab, bis sich ein Flächengewicht von insgesamt 2900 g/m² ergibt.

Der so hergestellte, noch unverfestigte Faserflor wird anschließend einer Wärmebehandlung unterzogen, sodass der schmelzbare Mantelanteil der in den einzelnen Florlagen enthaltenen bikomponenten Schmelzfasern aktiviert wird und den Vliesstoff verfestigt.

Diese Wärmebehandlung, auch Thermofusion genannt, kann mittels üblicher Flachbandtrockner, wie beispielsweise von Schott&Meissner hergestellt und im Buch "Vliesstoffe" beschrieben, durchgeführt werden.

Bedingt durch die unterschiedlichen Anteile von Schmelzfasern in den von der ersten und von der zweiten Legeeinrichtung erzeugten Florlagen kommt es zu einer unterschiedlichen Verfestigung dieser Lagen, sodass sich die erfindungsgemäßen Zonen hoher Dichte (5) aus den Florlagen mit hohem Schmelzfaseranteil und die Zonen geringer Dichte (6) aus den Florlagen mit geringem Schmelzfaseranteil bilden.

Ein so hergestelltes, erfindungsgemäßes Isoliermaterial (1) zeigt einen signifikanten Unterschied der Eindrückhärten von Oberseite (2) und Unterseite (3).

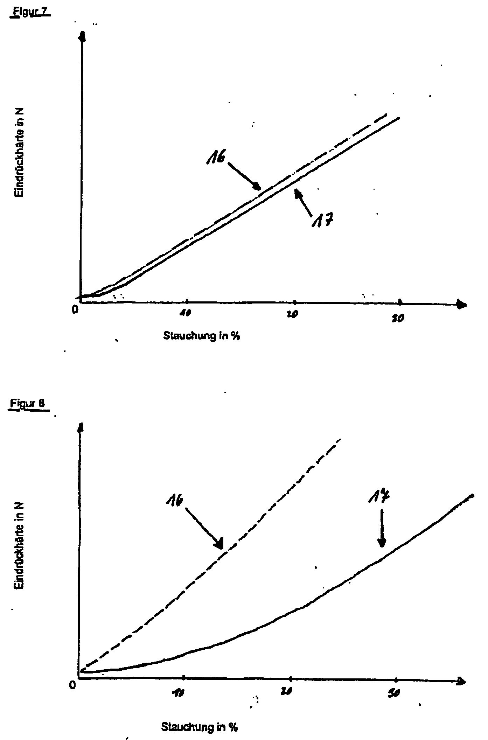

Beigefügte Tabelle 1 und auch die Figuren 7 und 8 verdeutlichen dies im Vergleich zum Stand der Technik nochmals.

Ein gemäß dem Stand der Technik ausgeführtes Isoliermaterial hat aufgrund des homogenen Aufbaus eine Eindrückhärte, die einen nur geringen Unterschied zwischen Ober- und Unterseite aufweist.

Die Figur 7 zeigt die Kraft-Stauchungskurve, die während der Ermittlung der Eindrückhärte an einem Material nach dem Stand der Technik aufgenommen wurde. Die Kurven für die Eindrückhärte der Oberseite (16) und der Unterseite (17) laufen fast deckungsgleich aufeinander.

Demgegenüber hat ein erfindungsgemäßes Isoliermaterial (1) einen deutlichen Unterschied der Eindrückhärten. Wie der Figur 8 zu entnehmen ist, zeigt sich ein deutlicher Unterschied der Eindrückhärte der Oberseite (16) zur Unterseite (17).

So beträgt beispielsweise beim erfindungsgemäß ausgeführten Isoliermaterial mit der Bezeichnung VP05019BA31-PHIL die Eindrückhärte der Oberseite (2) 5,7 N und auf der Unterseite (3) bei 1,9 N. Sie liegt also um das 3-fache höher.

Auch beim erfindungsgemäßen Isolationsmaterial mit der Bezeichnung VP05019BA31-PHOB liegt die Eindrückhärte auf der Oberseite (2) um das 2,5-fache über der der Unterseite (3).

Je ausgeprägter dieser Unterschied ist, umso besser ist das Verhalten eines erfindungsgemäß ausgeführten Materials in Bezug auf die Abdeckung und Isolierung.

Allerdings ist darauf zu achten, dass die Eindrückhärte der Unterseite (3) nicht zu groß gewählt wird, da ansonsten die Unterseite zu steif wird und daher die erfindungsgemäße Anpassung an Unebenheiten nicht mehr gegeben ist. Es können wieder Kamine (10) entstehen.

In einer bevorzugten Ausführungsform der Erfindung liegt die Eindrückhärte der Unterseite (3) daher kleiner 5 N. Für den Ausgleich und / oder die Abdeckung stark unregelmäßig geformter oder flächiger Vorsprünge (9) haben sich in einer besonders bevorzugten Ausführungsform, wie beispielsweise VP05019BA31-phil, Eindrückhärten der Unterseite (3) von kleiner 3N als geeignet erwiesen.

Durch die Fähigkeit des erfindungsgemäßen Isoliermaterials, sich wie in Figur (3) dargestellt an abstehende Konturen anzupassen, wird in dem Bereich, in dem das Isoliermaterial direkt in Z-Richtung belastet wird, die Dicke (4) des Isolationsmaterials (1) partiell verringert.

Durch diese Komprimierung in diesem Bereich wird an den Stellen mit direktem Kontakt zu einem Vorsprung (9), beispielsweise einer Rohrleitung oder einem Sparren, die Dichte des Isoliermaterials erhöht und damit einhergehend auch die Wärmeleitfähigkeit verringert.

In den benachbarten Bereichen, die keinen direkten Kontakt mit dem Vorsprung haben, schmiegt sich das Isoliermaterial, bedingt durch die Rückstellkraft der eingesetzten Ausgangsmaterialien, an die Kontur des Vorsprungs (9) an..

Dadurch wird die Dichte des Isoliermaterials in diesen Bereichen verringert und die Wärmeleitfähigkeit steigt geringfügig an jedoch ohne dass die Wärmedämmung vollständig verloren geht Bei Materialien nach dem Stand der Technik findet keine Anpassung an entstehende Kamine(10) statt, die Wärmedämmung geht durch die auftretende Kaminbildung komplett verloren.

Im Gegensatz zum Stand der Technik füllt also ein erfindungsgemäßes ausgeführtes Isoliermaterial (1) entstehende Hohlräume weitestgehend auf und beugt damit einer Kaminbildung vor.

Bei der Ermittlung der Wärmeleitfähigkeiten gemäß DIN 12667 und in der Einheit mW/(m*K) dargestellt, wurde überraschenderweise gefunden, dass sich eine hydrophobe Ausrüstung des erfindungsgemäßen Isoliermaterials günstig auf die Änderung der Wärmeleitfähigkeit bei erhöhten Umgebungsfeuchten und höheren Umgebungstemperaturen auswirkt.

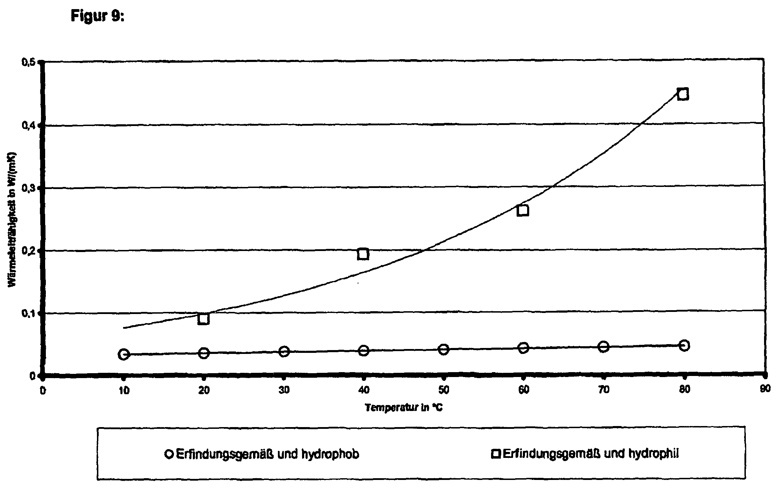

Dieses Verhalten wird in Figur 9 nochmals verdeutlicht.

Bei höheren Umgebungsfeuchten dringt Feuchtigkeit in das Isoliermaterial ein und erhöht die Wärmeleitfähigkeit innerhalb des Isoliermaterials. Dies bedeutet eine Verringerung der Dämmeigenschaften, sowohl thermisch als auch akustisch.

Wird ein erfindungsgemäß ausgeführtes Isoliermaterial (1) zusätzlich mit einer hydrophoben Ausrüstung versehen, erfährt es bei Beaufschlagung mit Feuchtigkeit eine deutlich geringere Änderung der Wärmeleitfähigkeit als ein hydrophiles erfindungsgemäßes Isoliermaterial (1).

Dieses Verhalten ist in Figur 9 verdeutlicht

Das erfindungsgemäß ausgeführte Material VP05019BA31 wurde zusätzlich einer Hydrophob-Ausrüstung unterzogen, sodass das Material an Ober- und Unterseite sowie über die gesamte Dicke gesehen hydrophobe Eigenschaften aufweist.

Beide Isoliermaterialien wurden zwei Stunden mit demineralisiertem Wasser beregnet. Die Muster wurden dann über 24h bei Normklima von 21°C/65%rel Luftfeuchte gelagert. Abschließend wurde die Wärmeleitfähigkeit bei verschiedenen Temperaturen ermittelt.

Es zeigte sich, dass nach Lagerung von 24h das hydrophile Isoliermaterials immer noch bis zu 10% Gewichtsprozent Wasser enthielt, wohingegen das hydrophob ausgerüstete Isoliermaterial eine Wasseranteil von kleiner 0,1 Gewichtsprozent aufwies.

Wie man der Figur 9 entnehmen kann, bleibt die Wärmeleitfähigkeit eines hydrophob ausgerüsteten Isoliermaterials (1) aufgrund der geringen Feuchte über einen weiten Temperaturbereich konstant, wohingegen das hydrophile, Restwasser enthaltende Isoliermaterial eine deutliche Änderung erfährt.

Zur Bestimmung der Hydrophobie wird ein einfacher Tropfentest durchgeführt. Ein Tropfen demineralisiertes Wasser wird auf eine Fläche des Isoliermaterials aufgebracht. Ist der Tropfen nach einer Zeitspanne von mindestens 2 Stunden nicht in die Struktur eingesunken, wird das Isoliermaterial als hydrophob bezeichnet.

Das Isoliermaterial muss dabei nicht über die gesamte Dicke oder auf beiden Seiten (2) und (3) hydrophobe Eigenschaften aufweisen, es ist auch möglich nur die Zone hoher Dichte (5) oder die Zone geringer Dichte (6) unter Verwendung von hydrophoben Ausgangsmaterialien herzustellen. Auch eine nur auf einer der Seiten (2) oder (3) befindliche Ausrüstung verhindert das Eindringen von Feuchte in das erfindungsgemäße Isoliermaterial (1). Die Wahl, welche der Seite (2) oder (3), beziehungsweise die Zone hoher Dichte (5) oder die Zone geringer Dichte (6) hydrophobe Eigenschaften aufweisen soll, hängt von der jeweiligen Endanwendung ab, es muss zumindest die Seite, auf welcher das Eindringen von Feuchte am wahrscheinlichsten ist, hydrophobiert sein.

Gemäß einer weiteren Ausführungsform kann die Seite (2) auch eine Oberflächenbehandlung, wie beispielsweise in einer bevorzugten Ausführungsform als thermische Glättung bis hin zur vollständigen Verhautung ausgeführt, aufweisen. Dies verbessert die mechanische Stabilität, z.B. die Begehbarkeit und hat zusätzlich eine Verbesserung der wasserabweisenden Eigenschaften zur Folge.

Auch ist es möglich, Folien oder Drucke aufzubringen, welche dann Hinweise für die Anwendung oder Verarbeitungshilfen im Sinne von Skalen aufweisen.

In einer weiteren Ausführungsform ist es auch möglich, den die Isoliermaterialien bildenden Ausgangsmaterialien wie Schaumstoff oder Vlies weitere Wirkstoffe zuzusetzen, um dem erfindungsgemäßen Isoliermaterial weitere Eigenschaften zu verleihen.

Beispielsweise können einem erfindungsgemäßen Isoliermaterial (1) flammhemmende Wirkstoffe wie beispielsweise Blähgraphit und / oder wärmespeichernde Zusätze wie z.B. Ruß zugesetzt werden. Auch der Einsatz von bakterizid / fungizid wirkenden Substanzen ist möglich. Dabei können diese Wirkstoffe in die Zonen hoher Dichte (5) und geringer Dichte (6) mechanisch eingebettet werden, es ist aber auch möglich, die Wirkstoffe direkt in die Ausgangsstoffe, z.B. in die Fasern einzubetten.

Erfindungsgemäß hergestellte Isoliermaterialien können je nach Anwendungszweck sowohl als Platten als auch in Form von Rollen hergestellt werden. Wird das Isoliermaterial in Form von Platten konfektioniert, können zusätzlich an den Außenseiten der Platten Nuten und Federn eingebracht werden, sodass eine formschlüssige, flächendeckende Verlegung ohne Unterbrechung der Isolationswirkung möglich ist.

**Tabelle 1:**

| Parameter | Handelsübliches Isoliermaterial nach dem Stand der Technik | Erfindungsgemäßes Isoliermaterial | Erfindungsgemäßes Isoliermaterial |
|---|---|---|---|
| Bezeichnung / Aufbau | VP080198A31/ Homogen | VP05019BA31 - PHIL/ Zweilagig | VP05019BA31-PHOB/ Zweilagig |
| Faserzusammensetzung | Homogener Aufbau aus | Zone hoher Dichte (5) | Zone hoher Dichte (5) |
| | 50% PET/CoPET-Schmelzfaser 4.4 dtex, | 50% PET/CoPET-Schmelzfaser 4.4 dtex, | 50% PET/CoPET-Schmelzfaser 4.4 dtex, |
| | 25% PET-Matrixfaser 1,7 dtex, | 30% PET-Matrixfaser 1,7 dtex, | 30% PET-Matrixfaser 1,7 dtex, |
| | 25% PET-Matrixfaser 3.3 dtex | 20% PET-Matrixfaser 3.3 dtex | 20% PET-Matrixfaser 3.3 dtex |
| | | Zone geringer Dichte (6) | Zone geringer Dichte (6) |
| | | 30% PET/CoPET-Schmetzfaser 4.4 dtex, | 30% PET/CoPET-Schmelzfäser 4.4 dtex, |
| | | 55% PET-Matrixfaser 1,7 dtex, | 55% PET-Matrixfaser 1,7 dtex, |
| | | 15% PET-Matrixfaser 3.3 dtex | 15% PET-Matrixfaser 3.3 dtex |
| Charakteristik | Hydrophil | Hydrophil | Hydrophob |
| Flächengewicht (in g/m², gemäß WSP 130.1(05) | 2400 | Gesamt: 2900 | Gesamt: 2900 |
| | | Zone hoher Dichte (5): 1400 | Zone hoher Dichte (5) 1300 |
| | | Zone geringer Dichte (6):1500 | Zone geringer Dichte (6): 1600 |
| Dicke (in mm, gemäß WSP 120.6 (05) bei 0,02kPa) | 105 | Gesamt: 140 | Gesamt: 121 |
| | | Zone hoher Dichte (5): 50 | Zone hoher Dichte (5): 43 |
| | | Zone geringer Dichte (6):90 | Zone geringer Dichte (6):78 |
| Dichte (in kg/m³) | 22,8 | Gesamt: 20,7 | Gesamt: 20,7 |
| | | Zone hoher Dichte (5): 28,0 | Zone hoher Dichte (5): 30,2 |
| | | Zone geringer Dichte (6):16,6 | Zone geringer Dichte (6):20,5 |
| Eindrückhärte Unterseite (in N) | 5,2 | 1,9 | 2,9 |
| Eindrückhärte Oberseite (in N) | 5,3 | 5,7 | 7,3 |
| Verhältnis Eindrückhärte Oberseite (2) zu Unterseite (3) | 1,0 | 3,0 | 2,5 |
| Wärmeleitfähigkeit im trockenen Zustand, gemessen bei 10°C (in W/(m*K), gemäß DIN 12667) | 0,0351 | 0,0338 | 0,0338 |
| Wärmeleitfähigkeit nach Beregnungstest und 24h Klimatisierung, gemessen bei 10°C (in W/(m*K), gemäß DIN 12667) | 0,0382 | 0,0360 | 0,0343 |

### Bezugszeichenliste:

- 1: Erfindungsgemäßes Isolationsmaterial
- 2: Oberseite
- 3: Unterseite
- 4: Dicke
- 5: Zone hoher Dichte
- 6: Zone geringer Dichte
- 7: Isolationsmaterial nach dem Stand der Technik
- 8: Wandung
- 9: Vorsprung
- 10: Kamin
- 11: Halterung
- 12: Kraftaufnehmer
- 13: Druckfinne
- 14: Prüftisch
- 15: Prüfling
- 16: Eindrückhärte Oberseite
- 17: Eindrückhärte Unterseite

## Patentansprüche

1. Isolationsmaterial (1) für die thermische und/oder akustische Isolierung, aufweisend eine Oberseite (2), eine Unterseite (3) und eine Dicke (4)
**dadurch gekennzeichnet, dass**
das Isolationsmaterial eine **der Oberseite (2) zugewandte** Zone hoher Dichte (5) und eine **der Unterseite (3) zugewandte Zone** geringer Dichte (6) enthält,
die Zone hoher Dichte (5) des Isoliermaterials (1) eine **nach der in der Beschreibung genannten Messmethode ermittelte** Eindrückhärte aufweist, die mindestens das Zweifache der Eindrückhärte der Zone geringer Dichte (6) beträgt und
**das Isolationsmaterial aus einem Vliesstoff oder einem Schaumstoff gebildet wird.**

2. Isolationsmaterial (1) nach Anspruch 1
**dadurch gekennzeichnet, dass**
die Zone geringer Dichte (6) mindestens 60% der Dicke (4) des Isolationsmaterials einnimmt.

3. Isolationsmaterial (1) nach Anspruch 1 oder 2
**dadurch gekennzeichnet, dass**
das Flächengewicht der Zone hoher Dichte (5) maximal 50% des Gesamtflächengewichts einnimmt.

4. Isolationsmaterial (1) nach Anspruch 1 bis 4
**dadurch gekennzeichnet, dass**
der Vliesstoff aus Matrix-Stapelfasern und thermoplastischen Schmelzfasern gebildet wird.

5. Isolationsmaterial (1) nach Anspruch 4
**dadurch gekennzeichnet, dass**
die Matrix-Stapelfasern aus Naturfasern und/oder Synthesefasern oder aus Mischungen der beiden bestehen.

6. Isolationsmaterial (1) nach Anspruch 4
**dadurch gekennzeichnet, dass**
der Anteil an thermoplastischen Schmelzfasern in den Zonen hoher Dichte (5) mindestens 30% beträgt.

7. Isolationsmaterial (1) nach Anspruch 4
**dadurch gekennzeichnet, dass**
der Anteil an thermoplastischen Schmelzfasern in den Zonen geringer Dichte (6) maximal 50% beträgt.

8. Isolationsmaterial (1) nach einem der vorhergehenden Ansprüche
**dadurch gekennzeichnet, dass**
die Dicke des Isoliermaterials zwischen 20 und 300mm liegt

9. Isolationsmaterial (1) nach einem der vorhergehenden Ansprüche
**dadurch gekennzeichnet, dass**
das Flächengewicht des Isoliermaterials zwischen 300 und 4000 g/qm liegt

10. Isolationsmaterial (1) nach einem der vorhergehenden Ansprüche
**dadurch gekennzeichnet, dass**
mindestens eine Seite des Isoliermaterials hydrophobe Eigenschaften aufweist.

11. Isolationsmaterial (1) nach einem der vorhergehenden Ansprüche
**dadurch gekennzeichnet, dass**
mindestens eine Seite des Isoliermaterials eine Oberflächenbehandlung aufweist.

12. Isolationsmaterial (1) nach einem der vorhergehenden Ansprüche
**dadurch gekennzeichnet, dass**
das Isoliermaterial brandhemmende Wirkstoffe enthält

13. Isolationsmaterial (1) nach einem der vorhergehenden Ansprüche
**dadurch gekennzeichnet, dass**
das Isoliermaterial wärmespeichernde Wirkstoffe enthält.

14. Isolationsmaterial (1) nach einem der vorhergehenden Ansprüche
**dadurch gekennzeichnet, dass**
das Isoliermaterial biozide und/oder fungizide Wirkstoffe enthält.

15. Isolationsmaterial (1) nach einem der vorhergehenden Ansprüche
**dadurch gekennzeichnet, dass**
das Isoliermaterial in Form von Platten vorliegt

16. Isolationsmaterial (1) nach einem der vorhergehenden Ansprüche
**dadurch gekennzeichnet, dass**
das Isoliermaterial in Form von Rollen vorliegt

17. Isolationsmaterial (1) nach Anspruch 16
**dadurch gekennzeichnet, dass**
das Isoliermaterial in an den Kanten eine Nut- und Feder- Struktur aufweist

18. Verwendung eines Isolationsmaterial (1) nach einem der Ansprüche 1 bis 17 als Dach- oder Gebäudeisolierung

19. Verwendung eines Isolationsmaterial (1) nach einem der Ansprüche 1 bis 17 als Isoliermaterial für Heiz- oder Kühlanlagen

20. Verwendung eines Isolationsmaterial (1) nach einem der Ansprüche 1 bis 17 als Isoliermaterial für Rohrleitungssysteme

## Claims

1. Insulation material (1) for thermal and/or acoustic insulation, having an upper side (2), a lower side (3) and a thickness (4),
**characterised in that**
the insulation material contains a zone of high density (5) **facing the upper side (2),** and a zone of low density (6) **facing the lower side (3),**
the zone of high density (5) of the insulating material (1) has an indentation hardness **determined according to the measuring method mentioned in the description,** which indentation hardness is at least twice the indentation hardness of the zone of low density (6), and
**in that the insulation material is formed from a non-woven fabric or a foam.**

2. Insulation material (1) according to claim 1,
**characterised in that**
the zone of low density (6) takes up at least 60% of the thickness (4) of the insulation material.

3. Insulation material (1) according to either claim 1 or claim 2,
**characterised in that**
the surface weight of the zone of high density (5) takes up at most 50% of the total surface weight.

4. Insulation material (1) according to claims 1 to 4,
**characterised in that**
the non-woven fabric is formed from matrix staple fibres and thermoplastic fused fibres.

5. Insulation material (1) according to claim 5,
**characterised in that**
the matrix staple fibres consist of natural fibres and/or synthetic fibres, or mixtures of the two.

6. Insulation material (1) according to any of the preceding claims,
**characterised in that**
the proportion of thermoplastic fused fibres is at least 30% in the zones of high density (5).

7. Insulation material (1) according to any of the preceding claims,
**characterised in that**
the proportion of thermoplastic fused fibres is at most 50% in the zones of low density (6).

8. Insulation material (1) according to any of the preceding claims,
**characterised in that**
the thickness of the insulating material is between 20 and 300 mm.

9. Insulation material (1) according to any of the preceding claims,
**characterised in that**
the surface weight of the insulating material is between 300 and 4000 gsm.

10. Insulation material (1) according to any of the preceding claims,
**characterised in that**
at least one side of the insulating material has hydrophobic properties.

11. Insulation material (1) according to any of the preceding claims,
**characterised in that**
at least one side of the insulating material has a surface treatment.

12. Insulation material (1) according to any of the preceding claims,
**characterised in that**
the insulating material contains fire-retardant agents.

13. Insulation material (1) according to any of the preceding claims,
**characterised in that**
the insulating material contains heat-retaining agents.

14. Insulation material (1) according to any of the preceding claims,
**characterised in that**
the insulating material contains biocidal and/or fungicidal agents.

15. Insulation material (1) according to any of the preceding claims,
**characterised in that**
the insulating material exists in the form of panels.

16. Insulation material (1) according to any of the preceding claims,
**characterised in that**
the insulating material exists in the form of rolls.

17. Insulation material (1) according to claim 16,
**characterised in that**
the insulating material has a tongue and groove structure at the edges.

18. Use of an insulation material (1) according to any of claims 1 to 17 as roof insulation or building insulation.

19. Use of an insulation material (1) according to any of claims 1 to 17 as insulating material for heating or cooling systems.

20. Use of an insulation material (1) according to any of claims 1 to 17 as insulating material for pipe systems.

## Revendications

1. Matériau d'isolation (1) pour une isolation thermique et/ou acoustique, présentant une face supérieure (2), une face inférieure (3) et une épaisseur (4)
**caractérisé en ce que**
le matériau d'isolation contient une zone de densité élevée (5) **orientée vers la face supérieure (2)** et une **zone** de densité faible (6) **orientée vers la face inférieure (3),**
la zone de densité élevée (5) du matériau d'isolation (1) présente une dureté d'indentation **selon la méthode de mesure établie citée dans la description,** qui correspond à au moins deux fois à la dureté d'indentation de la zone de densité faible (6) et
**le matériau d'isolation est formé par un non-tissé ou une mousse.**

2. Matériau d'isolation (1) selon la revendication 1,
**caractérisé en ce que**
la zone de densité faible (6) englobe au moins 60 % de l'épaisseur (4) du matériau d'isolation.

3. Matériau d'isolation (1) selon les revendications 1 ou 2,
**caractérisé en ce que**
le grammage de la zone de densité élevée (5) correspond au maximum à 50 % du grammage total.

4. Matériau d'isolation (1) selon les revendications 1 à 4,
**caractérisé en ce que**
le non-tissé est formé par des fibres empilées sous forme d'une matrice et de fibres de fusion thermoplastiques.

5. Matériau d'isolation (1) selon la revendication 5,
**caractérisé en ce que**
les fibres empilées sous forme d'une matrice sont constituées de fibres naturelles et/ou de fibres de synthèse ou de mélanges des deux.

6. Matériau d'isolation (1) selon l'une quelconque des revendications précédentes,
**caractérisé en ce que**
la proportion en fibres de fusion thermoplastiques est d'au moins 30 % dans les zones de densité élevée (5).

7. Matériau d'isolation (1) selon l'une quelconque des revendications précédentes,
**caractérisé en ce que**
la proportion en fibres de fusion thermoplastiques est d'au maximum 50 % dans les zones de densité faible (6).

8. Matériau d'isolation (1) selon l'une quelconque des revendications précédentes,
**caractérisé en ce que**
l'épaisseur du matériau d'isolation se situe entre 20 et 300 mm.

9. Matériau d'isolation (1) selon l'une quelconque des revendications précédentes,
**caractérisé en ce que**
le grammage du matériau d'isolation se situe entre 300 et 4000 g/m².

10. Matériau d'isolation (1) selon l'une quelconque des revendications précédentes,
**caractérisé en ce**
**qu'**au moins une face du matériau d'isolation présente des propriétés hydrophobes.

11. Matériau d'isolation (1) selon l'une quelconque des revendications précédentes,
**caractérisé en ce**
**qu'**au moins une face du matériau d'isolation présente un traitement de surface.

12. Matériau d'isolation (1) selon l'une quelconque des revendications précédentes,
**caractérisé en ce que**
le matériau d'isolation contient des matières actives ignifugeantes.

13. Matériau d'isolation (1) selon l'une quelconque des revendications précédentes,
**caractérisé en ce que**
le matériau d'isolation contient des matières actives stockant la chaleur.

14. Matériau d'isolation (1) selon l'une quelconque des revendications précédentes,
**caractérisé en ce que**
le matériau d'isolation contient des biocides et/ou des matières actives fongicides.

15. Matériau d'isolation (1) selon l'une quelconque des revendications précédentes,
**caractérisé en ce que**
le matériau d'isolation se présente sous la forme de plaques.

16. Matériau d'isolation (1) selon l'une quelconque des revendications précédentes,
**caractérisé en ce que**
le matériau d'isolation se présente sous la forme de rouleaux.

17. Matériau d'isolation (1) selon la revendication 16
**caractérisé en ce que**
le matériau d'isolation présente une structure de rainures et languettes sur les arêtes.

18. Utilisation d'un matériau d'isolation (1) selon l'une quelconque des revendications 1 à 17 en tant qu'isolation de toit ou de bâtiment.

19. Utilisation d'un matériau d'isolation (1) selon l'une quelconque des revendications 1 à 17 en tant que matériau d'isolation pour des installations de chauffage ou de refroidissement.

20. Utilisation d'un matériau d'isolation (1) selon l'une quelconque des revendications 1 à 17 en tant que matériau d'isolation pour des systèmes de conduites.
